# EUROPEAN PATENT APPLICATION

(11) **EP 2 226 363 A1**
(43) Date of publication of application: **08.09.2010**
(21) Application number: 09356016.7
(22) Date of filing: 23.02.2009
(51) Int. Cl.: C09C 1/42, C04B 14/20, C04B 20/02, C04B 20/06, C04B 28/02, C04B 14/10

(54) **Use of activated clay**

(71) Applicant: Lafarge SA, 75116 Paris (FR)
(72) Inventor: Gartner, Ellis, 69003 Lyon (FR)
(74) Representative: Mérigeault, Shona

(57) **Abstract**

The invention provides the use in a cementitious composition of an activated clay, which clay is obtainable by a process which comprises contacting a clay with a mineral acid and heating the acid-treated clay to obtain the activated clay.

## Description

This invention relates to the use of an activated clay in cementitious mixtures.

The manufacture of cement produces large quantities of the greenhouse gas carbon dioxide. Such emissions are undesirable and research continues in order to identify ways of reducing them. Options include improving the energy efficiency of the cement manufacturing process, replacing high carbon fuels by low carbon fuels, the use of blended cement in which part of the cement is replaced by other materials, using alternative cements whose manufacture generates lower carbon dioxide emissions and removing carbon dioxide from flue gases.

Metakaolins, which are produced by calcining kaolin, are potential partial substitutes for Portland-based cements in lime-activated or Portland clinker-activated pozzolanic cements. They have also been used as the major ingredient in alkali-activated pozzolanic cement systems (geopolymers).

They are, however, relatively expensive as their manufacture requires reasonably pure kaolinite clay as a starting material. Deposits of such kaolinite clay are relatively rare: they can be contaminated by, for example, other clay minerals or closely related minerals such as illites, smectites, chlorites, micas, etc, carbonate minerals such as calcite and dolomite, by sulfide minerals such as iron pyrites, and, very frequently, by quartz.

Many natural clay deposits comprise other clay minerals, such as illites or smectites, which cannot generally be activated to nearly as great an extent as kaolin by heating, and thus cannot usually be used as cement replacement materials.

Clays are hydrous aluminium silicates which generally comprise two structural units. The units associate in layers. A sheet of silicon-oxygen tetrahedra is associated with an octahedral sheet comprising aluminium or magnesium in six-fold coordination with oxygen. Tetrahedral and octahedral sheets together form a layer. Cations may be present between the layers. The cations include alkali metals, for example potassium or sodium, alkaline earth metals, for example calcium or magnesium, and other metals such as iron.

The present invention seeks to provide the use of an activated clay in cementitious mixtures, the activation serving to increase the clay's hydraulic activity, to increase the compressive strength of cementitious mixtures comprising the activated clay, to reduce the water demand of the clay when used in cementitious mixtures and/or to improve the workability of cementitious mixtures comprising the activated clay (in comparison with clay which has been activated only by heating).

The invention accordingly provides the use in a cementitious mixture of an activated clay, which activated clay is obtainable by a method which comprises contacting a clay with a mineral acid and heating the acid-treated clay to obtain the activated clay. Heating is generally to a temperature of more than 300°C, preferably more than 400°C. The maximum temperature is preferably less than the melting point of the clay, generally less than 1000°C. The temperature is generally 500°C to 1000°C, preferably 600°C to 800°C. The activated clay product after heating is generally amorphous.

The maximum temperature to which the acid-treated clay is heated should not be high enough to cause substantial melting or to allow substantial recrystallisation to, for example, mullite. The resulting crystallinity is associated with reduced activation.

The clay is preferably maintained at an elevated temperature until a substantially constant weight is reached (for example until water is eliminated and the evolution of fumes is substantially complete). Heating is generally carried out for a time sufficient to permit reaction with the acid to occur, for example from one minute to one hour depending on the temperature and the type of clay.

Clay minerals comprise four main groups: kaolinites; montmorillonite/smectites; illites; and chlorites. The clay used in the invention is preferably an illite or a smectite. The clay used in the invention generally comprises one or more alkali and/or alkaline earth metal cations. Additional cations may also be present, for example iron, generally ferric iron.

The clay may comprise a carbonate, for example an alkaline earth metal carbonate, for example a calcium carbonate and/or a magnesium carbonate. The clay preferably comprises less than 20% of carbonate.

The anion of the mineral acid is generally an anion which is acceptable for use, after the heating step, in cementitious mixtures. The acid is preferably sulphuric acid, sulphur trioxide or a mixture comprising sulphur dioxide and oxygen. Other acids include phosphoric acid, hydrochloric acid and nitric acid.

The term "acid" in this specification including the accompanying claims is to be understood to embrace an aqueous acid (for example sulphuric acid) or its anhydrous form (for example sulphur trioxide or a mixture comprising sulphur dioxide and oxygen). The anhydrous form is generally in the gaseous state at the temperatures used.

Concentrated acid is preferably used. The presence of water in the acid requires additional heat to be supplied for its removal in the heating step.

The term "concentrated acid" in this specification including the accompanying claims is to be understood to embrace acids comprising up to 15% of water, preferably up to 10%, more preferably 5% or less.

The amount of acid used in practice is, for example, from 4X to X/4, preferably from 2X to X/2, where X is the amount of acid theoretically required to react with the total amount of alkali and alkaline earth metals present in the clay. The amount of concentrated acid used is generally about 20% relative to the weight of clay,

When the acid is anhydrous the clay may be contacted with a gas stream comprising the acid, for example a gas stream comprising sulphur trioxide or comprising sulphur dioxide and oxygen. Such a gas stream is produced when a sulphur rich fuel or a mixture of sulphur and a fuel, for example a hydrocarbon, is burned in oxygen or air. A gas stream comprising sulphur trioxide is also produced in a cement kiln when a sulphur rich fuel, for example petroleum coke, is used as fuel: the gas then generally comprises a mixture of sulphur trioxide and sulphur dioxide. When sulphur dioxide is present oxygen is preferably also present (preferably in an amount theoretically sufficient to convert the sulphur dioxide to sulphur trioxide, more preferably in a slight excess). When the clay is contacted with a gas stream comprising the acid any acid not captured by the clay may be recycled or captured. The acid may be captured in a bed comprising limestone. The bed may be of cement kiln feed.

It is believed that activation of the clay is associated with the removal or transformation of alkali and alkaline earth metal cations from the clay. Such alkali and alkaline earth metal cations may be present between the individual layers of the clay structure and may have a stabilising effect on the clay structure. When the clay reacts with the acid, the alkali and alkaline earth cations may be partially or completely extracted from the clay and converted into salts of the acid.

The clay may be contacted with the acid in a continuous or batch-wise process. By way of example, acid may be passed through a bed of the clay. In this embodiment the acid, after contact with the clay, may be analysed for the presence of alkali metal cations, such as sodium or potassium, and/or alkaline earth metals, for example calcium or magnesium in order to monitor their removal and/or conversion to water-soluble species.

In the batch process the clay is contacted with acid and the mixture heated to produce the activated clay without removal of water-soluble species such as potassium or sodium sulphate.

The clay may be treated with acid in an optionally stirred liquid suspension or slurry or may be nodulised or pelleted with acid. When the acid is in the gaseous state the clay treated may be in particulate form, for example in a fluidised bed or the acid may be passed through a bed of clay in, for example nodulised or pelleted form.

Clay treated by the method of the invention exhibits improved properties when mixed with cement to produce a cementitious mixture, for example a mortar or concrete.

The invention provides an activated clay for use in cementitious mixtures.

The invention also provides an activated clay according to the invention in particulate form, preferably substantially all (for example more than 95%, preferably more than 98%, most preferably more than 99%) of which is capable of passing through a 100µm sieve. The particulate form may be achieved, for example, by grinding or milling. The clay may be co-ground with clinker.

The invention also provides a composition, for example a blended cement, comprising a ground clinker and an activated clay obtainable by contacting a clay with a mineral acid and heating the acid-treated clay to obtain the activated clay. The ratio of ground clinker to the activated clay is preferably from 90:10 to 50:50, more preferably from 70:30 to 50:50.

The term "cement" as used in this specification including the accompanying claims embraces Portland cements, slag cements, Portland-pozzolan cements, lime-pozzolan cements, belite-sulphoaluminate cements and alkali-activated "geopolymeric" cements.

In this specification, including the accompanying claims, it is to be understood that percentages, unless otherwise specified, are by weight.

The invention is illustrated by the following non-limiting Examples.

The illite used was from Le Puy, France. Although the material comprised primarily illite, crystalline impurities included calcite, sanidine (a K-feldspar), quartz and kaolinite.

The elemental (oxide) composition of the illite sample is shown in the following Table in which the figures are percentages.

**Table 1**

| SiO₂ | Al₂O₃ | Fe₂O₃ | CaO | MgO | K₂O | Na₂O | SO₃ | TiO₂ | Mn₂O₃ | P₂O₅ | Cr₂O₃ | ZrO₂ | SrO |
|---|---|---|---|---|---|---|---|---|---|---|---|---|---|
| 46.38 | 20.81 | 6.87 | 3.80 | 2.78 | 7.03 | 0.23 | 0.06 | 0.763 | 0.07 | 0.24 | 0.01 | 0.01 | 0.02 |

The loss on ignition was 11.07% giving a total of 100.11 % (the difference from 100% being attributable to experimental error).

### Example 1

10g of illite was treated with 3g of 95% H₂SO₄ in 40m1 of water. The suspension (in a round bottomed Pyrex flask) was then evaporated to dryness with an electric heater. The maximum temperature attained was well below 200°C. (The extraction and heating was done in a fume hood to avoid all possible problems with acid fumes). The dry residue was then extracted with deionised water and the resulting suspension (which showed signs of a brownish precipitate formation) was filtered. It was then finally made up to a total volume of one litre from which samples were taken for ICP (inductively coupled plasma) spectrometric analysis. A sample of this solution was also titrated with NaOH and found to contain acidity equivalent to 1.3g/litre of H₂SO₄, which implies that only about 54% of the 2.85g of H₂SO₄ initially present had actually reacted with the illite. However, this ignores the acidity of certain possible products, as discussed in more detail below.

The solids in the flask after drying and before leaching weighed 11.6g, indicating a 16% gain in weight, slightly more than the weight of H₂SO₄ (1.3g) assumed to still be present based on the titration. However, this still implies a mass loss of about 1.25g relative to the total initial weight of illite plus acid (12.85g). Given that the illite had an LOI (loss on ignition) of 11%, most of this mass loss seems to be associated with the LOI of the illite, which is probably in the form of water (including OH groups, etc.) and CO₂ (from carbonates). Thus, the mass balance is consistent with the concept that the acid first reacts with carbonates (e.g. calcite) releasing CO₂ gas, and then may also attack the various elemental "oxides" in the mineral structure.

### Example 2

The procedure described in Example 1 was followed except that 2g of 95% sulphuric acid (1.9g of H₂SO₄) was added initially and the sample was then dried and maintained at 200°C for 30 minutes before cooling and extracting with deionised water. The final mass of the dry residue was only very slightly (about 3%) greater than the mass of the initial illite sample, implying a greater mass loss than can be explained simply by the LOI of the illite. The titration of the aqueous extract showed acidity equivalent to about 0.4g of H₂SO₄, implying that about 21 % of the acid remained unreacted. However, this ignores the acidity of certain possible products, as discussed in more detail below.

### Example 3

20g of illite was treated with 4g of 95% sulphuric acid. It was then dried and heated to 800°C in a ventilated oven (and maintained at 800°C for one hour). After cooling, the residue was extracted with deionised water as described in Examples 1 and 2.

The results of ICP analyses of the three filtrates of Examples 1 and 2 and Example 3 are shown in Table 2.

The results of the liquid extractions converted to values relative to the initial mass of illite treated are summarized in Table 2 below:

**Table 2**

| Element (oxide) | SiO₂ | Al₂O₃ | Fe₂O₃ | CaO | MgO | K₂O | Na₂O | SO₃ | P₂O₅ |
|---|---|---|---|---|---|---|---|---|---|
| Mass percentage of oxide extracted relative to initial mass of illite | | | | | | | | | |
| Example 1 | 0.07 | 3.63 | 1.34 | 2.19 | 1.19 | 1.50 | 0.04 | 17.4 | 0.05 |
| Example 2 | 0.08 | 2.62 | 0.82 | 3.26 | 0.91 | 1.16 | 0.03 | 14.6 | 0.04 |
| Example 3 | 0.04 | 0.02 | 0.01 | 2.49 | 0.71 | 0.28 | 0.01 | 4.30 | 0.01 |
| Illite in water | 0.03 | 0.01 | 0.01 | 0.01 | 0.02 | 0.03 | 0.03 | 0.02 | 0.01 |
| Mass percentage of oxide in initial illite sample | | | | | | | | | |
| | 46.38 | 20.81 | 6.87 | 3.80 | 2.78 | 7.03 | 0.23 | 0.06 | 0.24 |
| Mass percentage of element solubilised by acid treatment | | | | | | | | | |
| Example 1 | 0 | 17 | 19 | | 43 | 21 | 17 | | 21 |
| Example 2 | 0 | 13 | 12 | | 33 | 16 | 14 | | 17 |
| Example 3 | 0 | 0 | 0 | 26 | | 4 | 6 | | 1 |

The results show that treatment with acid when followed by drying at moderate temperatures is very efficient in extracting calcium from the illite sample. Most of the calcium in the sample was present as calcite, which should react directly with the acid at room temperature to form moderately soluble calcium sulfates.

The next most readily extracted element was magnesium, again probably because at least a significant fraction of it may have been present as a carbonate.

The extraction efficiencies of Al, Fe, K and Na in Examples 1 and 2 were all about the same, suggesting that there was no preferential extraction of the alkali metals from within the illite structure. Rather, the acid attacked the illite in total, dissolving a certain fraction of it (there was not enough acid used to dissolve all of it). Consistent with this, about 50% more of each of these four elements was liberated when the acid amount used was increased by 50% (comparing Example 2 with Example 1). The titration used to determine unreacted acid in the leachate is likely also to measure some, if not all, of the aluminium and iron sulfates, as these are easily hydrolysed at pHs close to neutral. It is considered unlikely that much unreacted acid would have remained in the dry residues.

Almost no silica was solubilized in any of these tests. The control solution obtained by leaching untreated illite contained almost negligible quantities of all of the elements of interest.

Example 3, which involved the heating to 800°C, gave very different results. This treatment destroyed the soluble Al and Fe sulfates. Surprisingly, it also seems to have greatly reduced the amount of soluble K and Na. It is not clear why this should be, as alkali sulfates are generally stable and not very volatile at 800°C. It is possible that the alkali sulfates reacted with the Al and Fe sulfates to form complex oxy-sulfates that were less soluble. Meanwhile, the calcium sulfate remained mainly in a soluble form, probably anhydrite-II. Mg was somewhat intermediate in its behaviour.

It was estimated that the mass of the sample after heating was fairly close to the mass of the original illite, the L.O.I. of the illite being compensated roughly by the additional sulfate. On this estimated basis, the residue must have contained about 6% CaSO₄, 2% MgSO₄ and 0.5% K₂SO₄ by mass in order to account for the results of the liquid extraction.

### Example 4

In order to provide enough solid residue for mortar tests, a larger batch of illite, totalling 370g, was treated in the same way as in Example 3, but without the subsequent water extraction step. The treated clay was orange in colour and rather lumpy, although certainly not strongly sintered. It was ground gently and sieved by hand (to ensure at least 95% passing a 100µm sieve) in order to provide a physical form equivalent to calcined clays used as comparison materials. The sieved material was used in a series of mortar tests using a water/cement (w/c) ratio of 0.55 and the Portland cement (Ciment SPLC LHY), at a cement replacement level of 30% by mass.

The mortars were prepared and tested in accordance with EN 196-1 except that the w/c ratio was 0.55.

The results obtained were compared with those obtained using the same illite sample but treated only thermally at what appeared to be the optimum temperature for this material (1000°C). In the mortar tests the control mixes with pure cement and a 70:30 blend of the cement with untreated illite were also carried out to provide the necessary reference mixes for comparison of the effectiveness of the treatment. The results obtained are shown in Table 3, in which C in the first column denotes "Cement".

| Binder | | Flexural strength, MPa | | Compressive strength, MPa | |
|---|---|---|---|---|---|
| | Series | 7 days | 28 days | 7 days | 28 days |
| C (Cement SPLC LHY) | 1 | 7.2 | 9.0 | 40.0 | 55.8 |
| C (Cement SPLC LHY) | 2 | 7.8 | 8.9 | 39.5 | 55.0 |
| C+Untreated Illite | 1 | 4.5 | 5.4 | 26.2 | 35.0 |
| C+Untreated Illite | 2 | 4.7 | 5.9 | 26.6 | 34.4 |
| C+Illite (treated at 1000°C) | 1 | 5.6 | 7.3 | 26.2 | 38.7 |
| C+Illite (treated as in Example 4) | 2 | 5.8 | 9.0 | 35.5 | 50.9 |

It was noted that the untreated illite gave very poor workability compared to the pure ordinary Portland cement (OPC), but that both of the treated illites (at the 30% replacement level) gave excellent mortar workability. The illite treated by the method of Example 4 gave far better compressive strengths than the illite that had been heat treated at 1000°C. Considering the cement with 30% untreated illite as the baseline, the pure cement gives 28-day strengths that are 60% higher, the illite treated simply by heating to 1000°C gives strengths that are only 9% higher, whereas the acid-treated burned illite gives strengths that are 47% higher. This demonstrates the unexpected effect of the acid treatment.

## Claims

1. Use in a cementitious composition of an activated clay, which clay is obtainable by a process which comprises contacting a clay with a mineral acid and heating the acid-treated clay to obtain the activated clay.

2. Use according to claim 1 in which the clay comprises a smectite.

3. Use according to claim 1 in which the clay comprises an illite.

4. Use according to any one of the preceding claims in which the mineral acid is sulphuric acid.

5. Use according to any one of the preceding claims in which the mineral acid is in gaseous form as sulphur trioxide or as a mixture comprising sulphur dioxide and oxygen.

6. Use according to any one of the preceding claims in which the acid-treated clay is heated to 600°C to 800°C.

7. An activated clay obtainable by the process defined in claim 1.

8. An activated clay according to claim 7 in particulate form.

9. A cementitious mixture comprising an activated clay according to claim 7 or 8.
